(19) Europäisches Patentamt
European Patent Office
Office européen des brevets

(11) **EP 4 198 883 A1**

(12) **EUROPEAN PATENT APPLICATION**

(43) Date of publication:
**21.06.2023 Bulletin 2023/25**

(21) Application number: **21215424.9**

(22) Date of filing: **17.12.2021**

(51) International Patent Classification (IPC):
**G06T 7/00** $^{(2017.01)}$       **G06T 7/70** $^{(2017.01)}$

(52) Cooperative Patent Classification (CPC):
**G06T 7/0012; G06T 7/70;** G06T 2207/10081;
G06T 2207/20081; G06T 2207/20084;
G06T 2207/30016; G06T 2207/30101

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **SCHÄFER, Dirk
  Eindhoven (NL)**
• **HAASE, Hans Christian
  Eindhoven (NL)**
• **GRAß, Michael
  Eindhoven (NL)**

(74) Representative: **Philips Intellectual Property &
Standards
High Tech Campus 52
5656 AG Eindhoven (NL)**

(54) **INTERVENTIONAL CHARACTERIZATION OF INTRA-CEREBRAL THROMBUS USING 3D CONE BEAM COMPUTED TOMOGRAPHY**

(57)     A system and related method for determining position and composition of a clot in a patient. The system (SYS) comprises and input interface (IF) for receiving input imagery of a region of interest comprising contrasted input imagery and further input imagery contrasted lower than the contrasted input imagery. A location determiner (LD) of the system processes the contrasted imagery to determine a location of the clot. A composition determiner (CD) of the system determines a clot composition based on the further input imagery at the determined location. An indication of said clot location and clot composition is provided via output interface (OF).

**FIG. 2**

**Description**

FIELD OF THE INVENTION

The invention relates to a system and related method for determining position and composition of a clot in a patient, to a training system and related method for training a machine learning model for use in such a system for determining position and composition of a clot in a patient, to a system and related method for generating training data for use by such a training system, to an imaging arrangement, to a computer program element and to a computer readable medium.

BACKGROUND OF THE INVENTION

According to a 2019 fact sheet of the WHO (World Health Organization), available online at https://www.who.int/news-room/fact-sheets/detail/the-top-10-causes-of-death, stroke clocks in second in the top 10 of leading death causes. This amounted to 11% of total deaths worldwide in 2019. The condition of stroke, an obstruction of blood vessels in the brain, may cause, if not death, life changing disabilities. Ischemic stroke is caused by a mass of material ("clot") obstructing a vessel, thus potentially starving tissue from oxygenation. Quick diagnosis and treatment are called for in a suspected case. Edema, an accumulation of water into brain cells have been found to be an indicator for the presence of stroke.

3D Imaging modalities such as X-ray computed tomography (CT) are important diagnostic tools. They allow obtaining 3D (three-dimensional) imagery of the brain which can be analyzed for stroke to support rapid diagnosis and inform correct therapeutic measures. For example, in ischemic strokes, for subsequent interventional procedures (such as thrombectomy), knowledge of clot composition and location may be needed for correct device selection and therapy implementation.

SUMMARY OF THE INVENTION

There may therefore be a need for improved image-based support, in particular for stroke related medical applications.

An object of the present invention is achieved by the subject matter of the independent claims where further embodiments are incorporated in the dependent claims. It should be noted that the following described aspect of the invention equally applies to the training system and related method for training a machine learning model for use in such as system, to the system and related method for generating training data for use by such a training system, to the imaging arrangement, to the computer program element and to the computer readable medium.

According to a first aspect of the invention there is provided a system for determining position and composition of a clot in a patient, comprising:

> input interface for receiving input imagery of a region of interest comprising contrasted input imagery and further input imagery contrasted lower than the contrasted input imagery;
> a location determiner configured for processing the contrasted imagery to determine a location of the clot;
> a composition determiner configured to determine a clot composition based on the further input imagery at the determined location; and
> an output interface for providing an indication of said clot location and clot composition.

The system also for quick and robust clot characterization with good accuracy.

Contrasted image is based on contrast agent administered. Lower contrasted image is obtained when there is no contrast agent present at the region of interest, or when concentration or amount of contrast agent is below a threshold. The region of interest may comprise a part of a vasculature, such as neurovasculature (brain imaging).

In embodiments, the location determiner is implemented by one of i) a trained machine learning model, and ii) a non-machine learning segmentation algorithm. The composition determiner may be implemented as a trained machine learning model or by using non-ML methods, such as material decomposition if a spectral (energy discriminative) imaging apparatus is used.

Preferably, the location determiner processes the contrasted imagery and not the non-contrasted imagery. Conversely, the clot determiner preferably processes the non-contrasted imagery and not the contrasted imagery to avoid contrast interference with image value (such as Hounsfield units) distribution at the location. The location may be a voxel or pixel position or may comprise a neighborhood ( a subset) of pixel or voxel positions.

Alternatively, one or both of location and composition determiner process both, contrasted and non-contrasted imagery, using the respective other image type a context information. The may be beneficial when machine learning models are used to better exploit possible clot location versus clot composition correlations.

In embodiments, the location determiner is configured to perform a back-projection based on an output received from the trained machine learning model or from the segmentor.

In embodiments, the contrasted and lower contrasted input imagery are in different domains or in the same domain, including projection domain and image domain.

In embodiments, the contrasted imagery and the lower contrasted imagery are reconstructed imagery. Preferably one or both reconstructions are based on full scan(s), or at least one or both are based on a non-complete/partial scan where fewer projection images are acquired.

In embodiments, the further input imagery includes a time series of frames (in projection or image domain). The composition determiner configured to determine the clot composition based on an over-time contrast uptake as per the time series at the determined location. The contrast uptake may be represented by a contrast uptake over time curve at the location. Plural such curves for the given local may be processed jointly to improve robustness and discriminative power in respect of material making up the clot composition. A recurrent artificial neural network model may be used to implement the composition determiner.

In embodiments, the input imagery is based on data acquired by a spectral imaging apparatus.

In embodiments, the system includes a registration component configured to spatially register the input contrasted and non-contrasted imagery. The registration may be a 3D- 3D registration of contrasted and non-contrasted imagery. Alternatively, the registration is 3D/2D (two-dimensional).

In embodiments, the system includes a decision logic configured to determine, based on the input imagery, patient presentation of stroke, wherein the clot location and composition is determined only if the decision logic determines that that the stroke presentation is of the ischemic type. Differential diagnosis based on vital signs may be used by decision logic. The decision logic may be image-based. The decision logic may use the non-contrasted image. The decision logic may be implanted as a machine learning model.

In another aspect there is provided a training system configured to train, based on training data, the machine learning model for the composition determiner and/or the location determiner.

In another aspect there is provided a training data generator system configured to generate training data by modifying existing brain imagery to simulate locations of an artificial/virtual clot. Image structure representative of a clot is identified in historical patient imagery. Identification may be by a human expert or by image recognition. The (local) image structure representative of the clot may be overlayed on historical vessel (neurovasculature) imagery to effect the modification. The image structure is placed at different positions on the vessel tree in a given image or in different images to so simulate synthesized training data with a virtual clot (image structure) in different vessel positions. The training data is suitable for training a machine learning model to predict clot location. The vessel imagery may include vessel tree segmentations.

In another aspect there is provided an imaging arrangement comprising a system of any one of the above-described embodiments, and an imaging apparatus configured to provide the contrasted and/or low-contrasted input imagery.

In another aspect there is provided such an imaging arrangement, wherein the imaging apparatus is configured for one or more of: i) X-ray based tomographic imaging, ii) energy integrating imaging or spectral imaging, iii) phase contrast or dark-field imaging. The imaging apparatus may be cone beam CT. Other imaging geometry such as parallel or fan beam are also envisaged. Helical or non-helical scan paths may be used. Spectral imaging capability ma may be implemented by source- or detector-side solutions, including kVp switching, dual or multi-layer detector systems, photon-counting circuitry, and others.

In another aspect there is provided a computer-implemented method for determining position and composition of a clot in a patient, comprising:

receiving input imagery of a region of interest comprising contrasted input imagery and further input imagery contrasted lower than the contrasted input imagery;
determining a location of the clot based on the contrasted imagery;
determining a clot composition based on the further input imagery at the determined location; and
providing an indication of said clot location and clot composition.

In another aspect there is provided a computer implemented method for training, based on training data, the machine learning model.

In another aspect there is provided a computer implemented method of generating training data by modifying existing brain imagery to simulate locations of an artificial clot, the training data suitable for training a machine learning to predict clot location.

In another aspect there is provided a computer program element, which, when being executed by at least one processing unit, is adapted to cause the processing unit to perform any one of the methods.

In another aspect there is provided at least one computer readable medium having stored thereon the program element, and/or having stored thereon the trained machine learning model.

What is proposed herein is a system and method for implementing a new imaging protocol that enables accurate clot characterization. In some embodiments the protocol is based on obtaining spectral (such as dual-energy) cone beam (CB) CT images. The system allows quick clot characterization after contrast agent enhanced scanning using, in some embodiments, virtual non-contrast image reconstruction. The system enables timely and accurate device selections, thus fostering therapy success in thrombectomy for example, as such selection is informed by knowledge on location and composition of the clot in the neurovascular system.

Instead of using contrasted imagery throughout, what is proposed herein is to use a combination of contrast and non-contrasted imagery. In some image domain embodiments, a non-contrast image, such as a CBCT reconstruction is obtained. In addition, a contrasted reconstruction is obtained. Clot location is determined on the contrasted image. At this location so determined, the non-contrasted image is used to determine clot composition based on information in the non-contrasted image, such as distribution of HU (Hounsfield unit) values. It is preferable herein to use HU values before contrast was injected (or after contrast has cleared), as otherwise the HU based clot composition determination may be impacted. Whilst frequent reference will be made herein to HU values, other representations of matter versus X-ray radiation attenuation interaction in terms of other units are also envisaged herein.

"*user*" relates to a person, such as medical personnel or other, operating the imaging apparatus or overseeing the imaging procedure. In other words, the user is in general not the patient.

"*object*" is used herein in the general sense to include animate "objects" such as a human or animal patient, or anatomic parts thereof but also includes inanimate objects such as an item of baggage in security checks or a product in non-destructive testing. However, the proposed systems and methods will be discussed herein with main reference to the medical field, so we will be referring to the "object" as "the patient" or a part of the patient, such as an anatomy or organ, or group of anatomies or organs of the patient.

In general, the term "*machine learning*" includes a computerized arrangement (or module) that implements a machine learning ("ML") algorithm. Some such ML algorithms operate to adjust (explicit modelling) a machine learning model that is configured to perform ("learn") a task. Other ML algorithms (implicit modelling) operate direct on training data, not necessarily using an explicit/external model. In implicit modelling, the training data forms the mode. Adjusting or updating the model is called "training". In general task performance by the ML model may improve measurably, with training experience. Training experience may include suitable training data and exposure of the model to such data. Task performance may improve the better the data represents the task to be learned. "*Training experience helps improve performance if the training data well represents a distribution of examples over which the final system performance is measured*". The performance may be measured by objective tests based on output produced by the module in response to feeding the module with test data. The performance may be defined in terms of a certain error rate to be achieved for the given test data. See for example, T. M. Mitchell, "Machine Learning", page 2, section 1.1, page 6 1.2.1, McGraw-Hill, 1997.

BRIEF DESCRIPTION OF THE DRAWINGS

Exemplary embodiments of the invention will now be described with reference to the following drawings, which, unless stated otherwise, are not to scale, wherein:

Figure 1 is a schematic block diagram of an imaging arrangement;
Figure 2 is a block diagram of a system of determining clot characteristics based on imagery;
Figure 3 illustrates embodiments of the system of Figure 2 using a machine learning model;
Figure 4 shows a schematic block diagram of a machine learning model;
Figure 5 shows a system for training a machine learning model based on training data and a system for generating such training data;
Figure 6 shows a flow chart of a method for image-based computation of clot characteristics; and
Figure 7 shows a flow chart of a method of training a machine learning model based on training data and a method for generating such training data.

DETAILED DESCRIPTION OF EMBODIMENTS

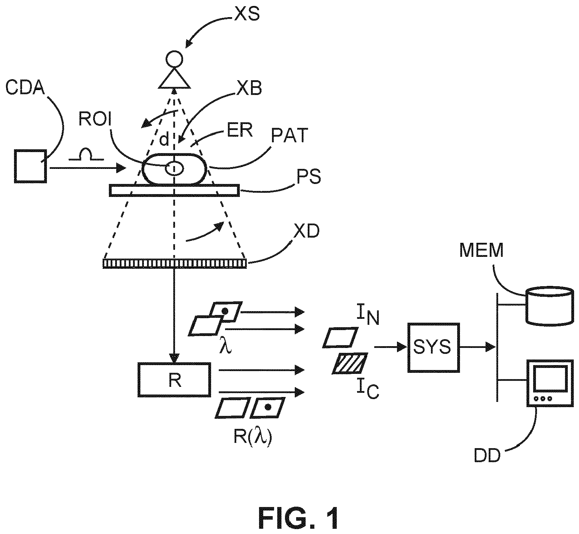

With reference to Figure 1, there is shown a schematic block diagram of an imaging arrangement IAR. The imaging arrangement IAR envisaged herein is for medical applications such as for diagnostic or therapeutic purposes. The arrangement IAR includes a medical imaging apparatus IA and a computer implemented system SYS, to be described more fully below.

The imaging apparatus IA generates data in relation to an imaged region of interest ("ROI") in an object to be imaged, such as a patient PAT. The data is transmitted via a wired or wireless communication infrastructure to the system SYS for processing. The system may be fully integrated into the imaging apparatus IA itself or may be integrated into computing system PU associated with the (or more) imager IA such as workstation. The system SYS can be used for rapid and accurate image-based localization and composition determination of foreign or innate objects in a patient, in particular in a patient's vascular system, lymphatic system or urinary tract system. Applications mainly envisaged herein are for the neurovascular system, in particular for stroke management. Thus, in preferred embodiments, the system is mostly configured for localization of a clot in a suspected stroke case, and rapid determination of the clot's composition. Such information on localization and composition may be needed to inform therapeutic action, and the quicker this is forthcoming the better the chances for patient recovery. The system is configured to supply such clot characterization information at requisite precision and with quick turnaround.

The imaging apparatus IA is preferably X-ray based and includes tomographic imaging modalities, but solely projection-based radiography arrangements are also envisaged herein. Imaging is aided by a contrast agent administered through a contrast agent delivery apparatus CDA, such as a contrast pump. Before imaging, a defined amount of contrast agent is administered to the patient. The contrast agent travels with the blood flow, and accumulates at the region of interest, such as in the brain. Projection data acquired by the imager IA once the contrast agent has accumulated sufficiently at the region of interest allows obtaining imagery at increased (enhanced) contrast. The contrast agent may include Iodine or Gadolinium. The contrast agent is administered as a liquid of high radiopacity.

The X-ray imaging apparatus includes broadly an X-ray source XS and an X-ray sensitive detector XD arranged opposite the X-ray source across an examination region ER. During imaging, the ROI resides in the examination region ER. The X-ray source is energized and an X-ray beam issues forth from its focal spot towards the detector and across the examination region and hence the ROI. The detector XD is configured to detect X-ray beam XB after its passage through the ROI. The detected radiation encodes attenuation information caused by interaction of the beam with tissue making up the ROI. The attenuated radiation is detected by a set of radiation sensitive pixels, preferably arranged in a 2D layout, that make up the detector's radiation sensitive layer. Data acquisition circuity (not shown) in communication with the pixels converts the intensities into digital pixel values that form projection raw data. In volumetric or tomographic arrangements, the X-ray source and detector are so arranged relative the examination region (with the ROI in it) that projection data is collected during imaging along multiple projection directions $d$ across the ROI. Only one such direction $d$ is shown in Figure 1 for illustration, but as said there are multiple as schematically shown by the curved arrow. In some tomographic scanners IA envisaged herein, the different projection directions can be achieved by rotation of the source XS around the region of interest. To this end, at least the source XS may be arranged in a gantry rotatable around the examination region. The tomographic imager IA may be of the C-arm type, with source and detector arranged in a rotatable C-shaped gantry, leaving thereinbetween the examination region for the patient to reside during imaging. Thus, in C-arm or other imager types, the detector may rotate with the source although this is not necessary in all embodiments as an annular detector circumscribing the examination region may be provided instead. A mechanical rotation of the source is also not required in all embodiments as $4^{th}$ generation scanner are also envisaged herein where there are multiple sources forming an anulus around the examination region ER. Cone beam CT imagers are preferred herein, but those of parallel and fan beam types are not excluded herein. Fully 3D acquisition arrangements based on 2D projection raw data, such as CBCT, preferably with helical scan path, are preferred herein, but section-wise scanning protocols are not excluded herein.

The projection raw data $\lambda=\{\lambda_d\}$ collected along different projection directions d may be processed by a reconstructor RECON to produce a 3D volume data or cross-sectional imagery $R(\lambda)$. The reconstructor RECON implements a tomographic reconstruction algorithm such as filtered back-projection, Fourier based methods, or iterative reconstruction algorithms, or others. As the projection raw data is preferably spatially 2D, the projection data itself may be visualized as projection imagery, such as in angiography, including DSA (digital subtraction angiography), also envisaged herein. C-arm type scanners or similar can be used for both, volumetric tomographic imaging and projection imaging as required. Reconstructor RECON process projection data in projection domain into the cross sectional (tomographic) images $R(\lambda)$ in an image volume. Image domain is a portion of 3D space in the examination region ER where the ROI is located. Imaging domain is conceptually made up of a 3D grid of image elements or voxels. Projection domain is 2D and represents the surface formed by the X-ray sensitive pixels of the detector XD. The reconstructor RECON implements a computational (spectral or non-spectral (energy integrating)) tomographic reconstruction algorithm to compute the image volume in the image domain. Computing the image volume $R(\lambda)$ results in populating the voxels with image values. The region of interest represents an organ or group of organs considered for the current imaging task. Brain imaging is one type of imaging task considered herein in embodiments.

The tomographic imager IA may be configured for spectral imaging instead of for conventional energy-integrating imaging, although the latter is not excluded. Source- or detector-side solutions may be used to practice spectral imaging. In particular, and as an example of the latter, photon-counting detector hardware is envisaged herein, and so is a dual-energy setup with dual-layer hardware for example. Examples of source-side solutions include multi-source setups, kVp switching, filtration and other. (Spectral) projection data in spectral imaging includes in addition to the spatial dimension(s), an energy coordinate. Thus, there are, per projection direction $d$, plural projection images, one (or more) per energy level. Spectral data processing algorithms exist that allow computing from the spectral projection data a host of useful image types in image or projection domain, such as Compton Scattering images, photoelectric absorption images, virtual mono-energetic imagery, material specific images, virtual contrast free or contrast only images, and other. It is in particular the virtual contrast free (virtual non contrast image) that may be of particular benefit herein, as will explained in more detail below.

Attenuation as the contrast conferring mechanism is mainly envisaged herein, but other setups, such as phase contrast and/or dark-field imaging are not excluded herein. In the latter two cases, refraction and small angle scattering, respectively, are the contrast conferring mechanisms of interest that are imaged for, although such setups can still be used to image for traditional attenuation (largely caused by photoelectric absorption and Compton scattering). Phase contrast and/or dark-field imaging may use additional hardware. This additional hardware may include an interferometer arranged in the examination region (not shown). The interferometer or other diffracting structure facilitates transforming the detected intensities into data that can be processed by a phase retrieval algorithm to extract the phase contrast and/or dark field signal.

Based on the acquired projection raw, input imagery $I_N$, $I_C$ may be obtained for processing by the proposed system SYS for clot characterization. Characterization of the clot includes its location and its composition unless stated otherwise.

The input imagery $I_N$,$I_C$ processable may be described in terms of domain and in terms of time coordination of projection data acquisition by imager and contrast agent administration. Turning to the domain description first, in one example, the input imagery $I_N$, $I_C$ is in image domain. Thus, the projection data $\lambda$ may be reconstructed by reconstructor RECON in image domain into the 3D volume/cross-sectional imagery $R(\lambda)$ for the ROI to obtain the input imagery $I_N$,$I_C$, and this is preferred herein. In another example the input imagery $I_N$, $I_C$ remains in projection domain. It is the projection raw data that is used as projection imagery. The detector XD may be arranged as a bi-plane detector system or as single detector system. The input imagery $I_N$, $I_C$ may comprise only projection imagery or, preferably, only volumetric imagery. However, in some embodiments, a mix is used of both projection imagery and volumetric imagery as input imagery $I_N$, $I_C$. In the following, if a generic reference to input imagery $I_C$, $I_N$ is made, this should be understood as reference to either projection imagery or reconstructed imagery or both. If a distinction is necessary between the two domains, the input imagery will be referred to herein as projection imagery/image or reconstructed imagery/image, as required.

In addition to the domain distinction, there is the mentioned timing coordination of acquisition and contrast agent administration. In whichever domain, the input imagery $I_N$,$I_C$ incudes non-contrast imagery $I_N$ and contrasted/contrast imagery $I_C$. The contrast imagery $I_C$ is or is based on projection data acquired whilst a sufficient amount of concentration of contrast agent accumulated at the region of interest. A single such contrast $I_C$ image may be acquired or a time $t$ series of such contrast imagery $I_C^t$ may be acquired as input imagery. Such a time series represents the uptake at the voxels or pixels, that is the over-time evolution of contrast at the voxels or pixels due to the evolving concentration of the administered contrast agent at the ROI. Thus, to each voxel or pixel is associated a respective contrast over time curve (time uptake curve, or TUC, for short). This take-up curve has upward slope initially due to an increased concentration of the contrast agent as contrast agent at the ROI, followed by a plateauing at maximum contrast, and finally a downward slope as the contrast agent clears the ROI (wash out phase). However, each of the TUCs at each voxel may differ individually. An input image that is a contrast image $I_C$ may be based on projection data acquired during at a time, or during a time window, when the contrast is at its maximum, either as measured at a particular reference pixel or by way of average contrast in the projection image. Thus, for present purposes, a contrasted input image is one based on projection data acquired when contrast agent is present at a given minimum concentration threshold at the ROI. This may or may not be the maximum contrast achievable. Non-contrast imagery input imagery $I_N$ is one based on projection data acquired at a time or during a time window when contrast agent concentration is less than the said threshold. This includes the case when there is no contrast agent present at the region of interest. The non-contrasted image $I_N$ may be referred to as the native image as it is acquired before contrast agent administration, or after the administered contrast agent has cleared the ROI. However, it is not necessary herein to use such native imagery as this can also be obtained computationally when the imaging apparatus is configured for spectral imaging which is indeed envisaged herein in embodiments. Thus, an approximation of such a native image may be computed from contrasted spectral projection data using spectral image processing algorithms, such as material decomposition techniques. Because the contrast material (such as Iodine or Gadolinium, or other) is known, a contrast material specific image is computed by material decomposition and is then subtracted from the original contrasted image to obtain a good approximation for the non-contrast case. Thus, spectral imaging allows reducing patient radiation dosage as there is no need to acquire via separate exposure the native non-contrasted image. The non-contrast imagery IN may be a single image or a time series of images.

Broadly, the preferably fully automated clot characterizer system SYS processes the input imagery $I_N$, $I_C$ to obtain an indication for the clot position and for the clot's material composition. The location and composition may then be stored in a memory MEM or may be displayed on a display device DD by operation of a visualizer VIZ. Such visualization may include overlaying a graphic component for the location and/or clot composition information on the contrast or non-contrast input imagery, or on any other image in relation to the region of interest. The graphic component may include localizer symbology such as a bounding box ("bbox"), understood herein in the general sense to include shapes such as rectangular, circular, or any other geometrical shape that encloses the clot location. Other pointer type symbology rather than of the encloser type may include hair-cross, arrow or other, superimposed at the computed location of the clot. The composition of the clot, such as its fibrin, red blood cell or platelet content may be shown as a table in numbers, or as a vector, etc, to indicate the respective percentages of composition. The clot materials (fibrin, red blood cells, platelets, etc) that make up the composition may be color-coded, and/or may be rendered graphically as a bar- or pie-chart, or in any other visualization. A combination of textual and graphical representation is also envisaged. Representation as overlay graphics is not a requirement herein.

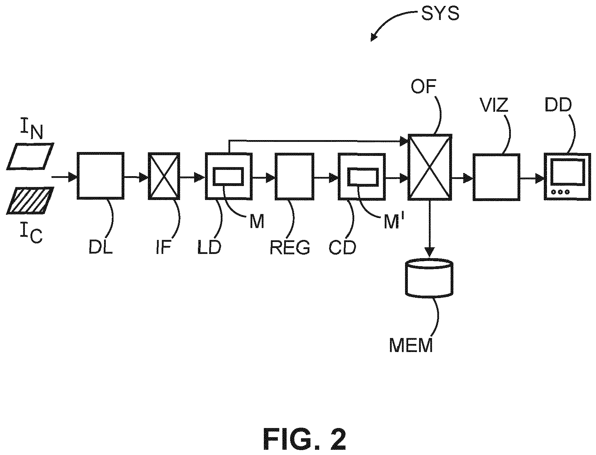

Reference is now made to Figure 2 which shows a block diagram of the clot characterization system SYS.

Non-contrasted input imagery $I_N$ is received at an interface IF. An optional decision logic DL processes the non-contrast image $I_N$, to determine whether the suspected stroke is of the ischemic type. The optional decision logic DL may use differential diagnosis based on the non-contrasted image. The decision logic may be machine learning based. If the determined type is not ischemic, but hemorrhagic, an alert signal is provided to initiate alternative medical procedures or protocols. If, however, the suspected stroke is determined of the ischemic type, the contrasted image $I_C$ is obtained. In spectral imaging, there is no need for a separate non-contrast acquisition. No decision logic DL is used in this case or the decision logic is non-image based on uses other patient data, such as vital data.

The non-contrasted and the contrasted imagery is received as input imagery $I_N$, $I_C$ at input interface IF and is passed on to location determiner LD.

The location determiner LD uses at this stage only the contrasted imagery $I_C$ to determine the location of the clot that causes the ischemic stroke condition. Once the clot location is determined, composition determiner CD examines the non-contrasted imagery $I_N$ at the location found by the upstream location determiner LD to compute the composition of the clot. Both pieces of information, clot composition and location, may then be made available by output interface OF as clot characterization information. If the there is no native spatial registry between the contrast and non-contrast image, a spatial registration component REG registers the (at least two) images $I_N$, $I_C$ before composition determiner operates as described. Registration allows representing the two input images $I_N$, $I_C$ in a common coordinate system so that the clot location found by location determiner LD in the contrasted image $I_C$ can be mapped to the same/corresponding location in the non-contrasted image ID.

The clot characterization output data may be stored in a memory MEM (such as a (medical) database)) or may be visualized by visualizer VIZ on display device DD in a graphics display as explained above, or may be otherwise processed as required. For example, the clot characterization information may be sounded out by operating an acoustic transducer to announce in natural language in the examination room the clot composition and location, the latter in terms of anatomical features for example, or as coordinates in the coordinate system etc. The clot composition may also be sounded out in percentages for example.

Thus, the proposed system SYS can be seen as a joint non-contrasted and contrast-ed (conventional or spectral) analysis for clot location and composition to support stroke diagnosis or therapy.

The location determiner LD may be based on a trained machine learning ("ML") model M. In particular, the machine learning model is trained based on synthetically generated or extant historic training data for the current or prior patents, such as may be sourced from medical databases. The model is trained beforehand in a training phase. Once trained, deployment phase can commence in which the model is used by system SYS in clinical practice to predict based on new contrasted input imagery (that is not part of the training data), the clot location. Training may be a one off is done repeatedly when new training data becomes available.

The model M may be configured as a regression type machine learning model. The model M operates to regress one or more contrasted input images into an image location indicative of the clot location. This location may be computed by model M in terms of a bbox for example. The location may be indicated in the input imagery by a bbox which includes the predicted clot location *P*. As a refinement of such a bbox, ML-based segmentation implementations are also envisaged herein.

Alternatively, non-ML based approaches are not excluded herein, such as hand-crafted algorithms, non-ML segmentation algorithms, such as region-growing, or segmentation driven by wavefront propagation or any other. Wave front propagation segmentation algorithms have been described by F M Porikli in "Automatic image segmentation by wave propagation", published Proc. SPIE 5298, Image Processing: Algorithms and Systems III, 28 May 2004.

In such non-ML setups, operation of the location determiner LD may harness the fact that an ischemic clot is, by definition, blocking a section of a branch of the neurovasculature. Thus, presence of clot in a segmented vessel tree of the neurovasculature as per contrasted image IC is thus likely to manifest as a discontinuity, a branch with a "missing" section, caused by the clot blocking flow of contrast agent. The location determiner LD may use a region growing algorithm that analyses the artery part of the tree structure. Using prior knowledge of the topology of cerebral artery trees, and a left versus right comparisons of the two hemispheres, the location of the occlusion and thus of the clot can be found.

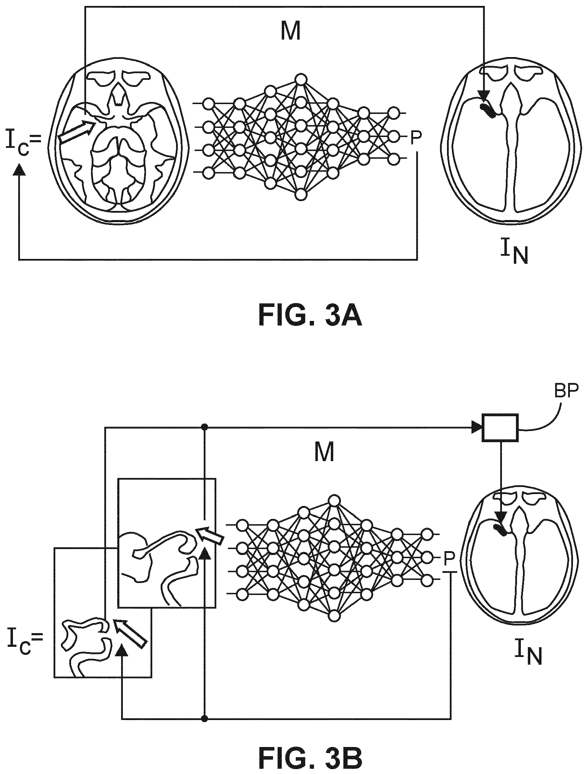

Operation of the location determiner LD is now illustrated in more detail with reference to Figures 3A, B. Whilst operation is illustrated in terms of a ML model M, such as an artificial neural network, this is not limiting herein the below described is of equal application to non-ML implementations of location determiner LD.

The input imagery, such as the contrasted reconstructed imagery $I_N$, is applied to the location determiner LD and processed to produce at its output an indication $P$ of the clot location in image domain (3D). This 3D location may be indicated visually on the input imagery as indicated by arrow, or may be instead or addition, displayed on the non-contrasted reconstructed image $I_N$ (after registration if applicable) as shown by the arrow on the right in Figure 3A.The determined location, such as defined by bbox, may then be used by the composition determiner CD to determine the composition of the indicated single voxel (or group of voxels) to ascertain the clot composition. Thus, in this embodiment, location determiner LD operates in image domain only, with input comprising at least one contrasted reconstructed image $I_C$. A single contrasted reconstructed image $I_C$ or plural such images may be used as input. The output location $P$ in image domain may be indicated in the non-contrasted scan $I_N$ as illustrated.

Figure 3B shows a different embodiment, where projection imagery is used instead as input. For example, two (or more) angiograms $\lambda_{i,j}$ at different projection directions $d_{i,j}$ may be used as contrasted input imagery $I_C$ input for processing by the machine learning model M to compute the clot location $P$ in projection domain. The location may be indicated in a graphics display on one, some, or all of in the input angiograms as shown by respective overlay arrows. The ML predicted location in the two angiograms may be passed on to a back projector BP that back-projects into the image domain to identify the 3D voxel location that corresponds in image domain to the projection localizations of the clot in projection domain. Back-projection uses the known projection directions $d_{i,j}$ associated with the two or more input projection images, and lines are cast along those direction to determine a point of intersection, the location of the clot in 3D image domain. The computed location may be indicated in image domain on the contrasted $I_C$ or non-contrasted image volume $I_N$, or on a suitable slice therethrough as shown. As a variant of Figure 3B, the model M is configured end-to-end to map 2D input to clot location $P$ in 3D image domain, without the need for a downstream back-projector BP stage as shown. Lastly, mapping into 3D from projection domain, whether end-to-end or facilitated by back-projector stage BP, may not always be required and a mere clot localization in 2D projection domain is sufficient. Thus, a user interface may be provided that allow the user to request this into 3D mapping specifically, if required. This allows saving CPU time where the clot can be judged from the projection imagery alone that no further or different therapeutic input is in order. This may also save contrast agent usage which may be beneficial for patients with impaired function of the kidneys. Moreover, X-ray dose may be saved compared to a complete scan for which more projection images may be required.

Another combination of input imagery $I_N,I_C$ solely in image domain includes a tuple of $(R(\lambda^c), R(\lambda^n))$, where "$n$", "$c$" indicate non-contrasted and contrasted. Thus, for improved performance, the non-contrasted reconstruction $R(\lambda^n)$ is co-processed with the contrasted reconstruction $R(\lambda^c)$ by the location determiner LD. A similar compressing may be done in projection domain.

As will be appreciate from Figure 3 broadly, in the Figure 3B embodiments, input imagery on which model M operates is solely in projection domain as opposed to the Figure 3A embodiments that operate only on 3D image domain imagery as input.

Alternatively, or instead of processing input exclusively in projection domain or image domain, respectively, hybrid embodiments are also envisaged herein. For example, in some embodiments, as variants of Figure 3B, the input of the contrasted one or more projections $I_C$ is complemented by a non-contrast scan $I_N$ in image domain to compute location P in 3D or 2D. Thus, in this hybrid embodiment, the machine learning model processes a input tuple of image data $(\lambda^c, R(\lambda^n))$. This option of hybrid processing may be useful if only a few contrast projections $\lambda^c$ are available.

Another such hybrid-domain embodiment includes a triple of input imagery such as $(\lambda^c, R(\lambda^c), R(\lambda^n))$. The projection direction for the contrasted projection $\lambda^c$, may preferably differ from the projections images used for the contrasted reconstruction $R(\lambda^c)$. The additional projection $\lambda^c$ may be chosen based on the projection directions used for $R(\lambda^c)$ and some selection criterion such as minimal vessel foreshortening or other to improve anatomical information content, thus enabling better ML performance. Thus, in embodiments, the input interface IF may include a selection logic that applies such a criterion to compile the input imagery to be processed.

Whilst Figures 3A,B have described input data in terms for their domain and contrast state ( non-contrasted vs contrasted), the image-based input $I_N,I_C$ for location determiner LD composition determiner CD (on which more further below), may comprise more than one image rather than a single image. Such plural-image-data input was described in Figure 3B where two more projection images were processed as per different projection direction such as may be supplied by a Bi-plane detector setup with multiple detectors with their image axis at 90° or other angles.

Instead of such a spatial plurality (spatial series), processing of a time-wise plurality (sequence or time series) of input image data $I_C$, $I_N$ ( "frames") is also envisaged herein. For example, a C-arm may be used to acquire plural such projection frames, contrasted or not, in a full acquisition rotation or less. In addition, such a time series of projection frames, again, contrasted or not, may be acquired for a given, fixed, projection direction.

In some embodiments of such time series of contrasted projection frames or contrasted imagery reconstructed therefrom, a single contrast injection can be used (perfusion). In a preferred embodiment two (or more) input contrasted images $I_C{}^j$ at different time points are made: One contrasted image $I_C{}^1$ is obtained early after contrast injection, i.e. during the arterial phase, such that substantially all arteries are flooded by contrast agent. This facilitates localization of the clot, as the clot location may present as an incomplete branch or other part of the vessel structure missing, thus indicative of the occlusion. A second contrasted image $I_C{}^2$ is obtained with a short time interval of several seconds after the first one $I_C{}^1$. This contrasted image $I_C{}^2$ may be called a "late arterial/venous scan". The late scan may represent contrast enhancement of any collateral vasculature definitions, and of the venous part of the vasculature. Moreover, the information about the different time dynamics of contrast uptake at the clot location may be used by the composition determiner CD to differentiate between clots of different compositions, such as between fibrin, mixed and blood clots for example, as will be explained in more detail below.

In some embodiments, in addition to, or instead of, the late arterial scan $I_C{}^2$, a further contrasted image $I_C{}^3$ ("very late scan") is obtained, at least one or several minutes later than the second contrasted $I_C{}^2$. Using three such scans $I_C{}^1$-$I_C{}^3$ appropriately timed apart may increase the discriminative power of the contrast uptake at different clot compositions. Thus, the composition determiner CD may process the uptake curve at clot location as per the sequence of timed contrasted $I_C{}^1$-$I_C{}^3$ images to compute clot composition.

Referring back to Figure 3B, the two contrasted projections are acquired in very close time proximity (e.g. by using a bi-plane system IA). In a further embodiment, these angiographic projection(s) may be replaced by the early and/or the late arterial scans $I_C{}^1$,$I_C{}^2$ mentioned above for determining the spatial clot location. The "very late scan" $I_C{}^3$ may then be obtained as a reduced contrast substitute for the non-contrast input image for processing by the composition determiner CD to determine or discriminate clot composition.

Whilst the Figures 3A, B illustrate use of a machine learning model M, this is not required herein in all embodiments, and any one of the embodiments discussed above in relation to Figures 3A,B (safe for the end-to-end mapping into 3D without back-projection) are also applicable in case the location determiner LD is a segmentation algorithm or is otherwise classically (analytical modelling) implemented without machine learning.

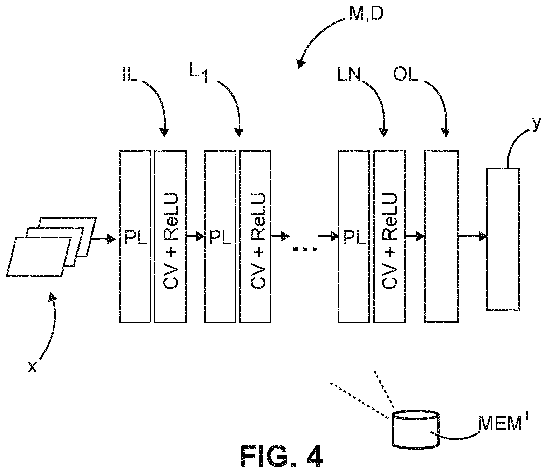

Referring first to Figure 4, this shows a schematic block diagram of the machine learning model M according to some embodiments as may be used to implement location determiner LD, or indeed the composition determiner CD, the latter being discussed in more detail below. Machine learning models M of the artificial neural type, or simply neural networks ("NN"), may be preferred herein, in particular, of the convolutional type. Convolutional neural networks ("CNN") have been shown to be of particular benefit in processing spatial data, such as is image data. CNNs uses convolutional operators CV.

The NN model M is made up of a set of computational nodes arranged in cascading layers, with nodes in one layer passing their output as input to nodes in a follow up layer. This is illustrated in the respective center portion of Figures 3A, B with lines representing the input/output interconnections. Figure 4 affords a more schematic representation with nodes in layers shown as blocks IL, $L_j$, OL.

In Figure, 4, $x$ indicates input data such as the contrasted imagery $I_C$ as discussed in Figure 3A,B, whilst $y$ indicates the output, in particular location $P$ of the clot in projection or image domain.

The model network M may be said to have a deep architecture because it has more than one hidden layer. In a feed-forward network, the "depth" is the number of hidden layers between input layer IL and output layer OL, whilst in recurrent networks the depth is the number of hidden layers, times the number of passes. Recurrent architectures may be preferred herein if a series of images for the uptake curves are provided as input for improving robustness of the clot location estimate (series of input images $I_C{}^1$-$I_C{}^3$ as described above) or in particular for estimating the clot composition. For example, plural such series may be so processed by recurrent networks, such as the timed input images $I_C{}^1$-$I_C{}^3$ described above.

The layers of the network, and indeed the input and output imagery, and the input and output between hidden layers (referred to herein as feature maps), can be represented as two or higher dimensional matrices ("tensors") for computational and memory allocation efficiency.

Preferably, the hidden layers include a sequence of convolutional layers, represented herein as layers $L_1$ - $L_N$. The number of convolutional layers is at least one, but a plurality is preferred, such as 2-5, or any other number, for example in the 10s or in the 100s or higher still..

In deployment, input data x is applied to input layer IL, such as the contrasted or non-contrasted input imagery $I_C$,$I_N$, depending on the embodiment. The input data x then propagates through a sequence of hidden layers $L_1$-$L_N$ (only two are shown, but there may be merely one or more than two), to then emerge at output layer OL as an estimate output $M(x)=y$. As per the embodiments of described above, the output M(x) may be clot location $P$ or clot composition result $C$. Location $P$ may be provided as one or more coordinates (such in a segmentation) or as a bbox $[(a,b), w,h]$ or $[(a,b,c), w, h, d]$, wherein $(a,b)$ or $(a,b,c)$ are coordinates in 2D or 3D, respectively, of a designated point of the bbox, such as lower left hand corner, etc. Coordinates $w,h,d$ is width, height and depth, respectively. $C$ may be a vector for material proportions, or C may be a classification score.

In embodiments, downstream of the sequence of convolutional layers, and upstream the output layer, there may be one or more fully connected layers (not shown), in particular if a regression result is sought. The output layer ensures that the output *y* has the correct size and/or dimension.

Preferably, some or all of the hidden layers are convolutional layers, that is, include one or more convolutional filters CV which process an input feature map from an earlier layer into intermediate output, sometimes referred to as logits. An optional bias term may be applied by addition for example. An activation layer processes in a non-linear manner the logits into a next generation feature map which is then output and passed as input to the next layer, and so forth. The activation layer may be implemented as a rectified linear unit RELU as shown, or as a *soft-max*-function, a sigmoid-function, *tanh*-function or any other suitable non-linear function. Optionally, there may be other functional layers such as pooling layers PL or drop-out layers (not shown) to foster more robust learning. The pooling layers PL reduce dimension of output whilst drop-out layer sever connections between nodes from different layers.

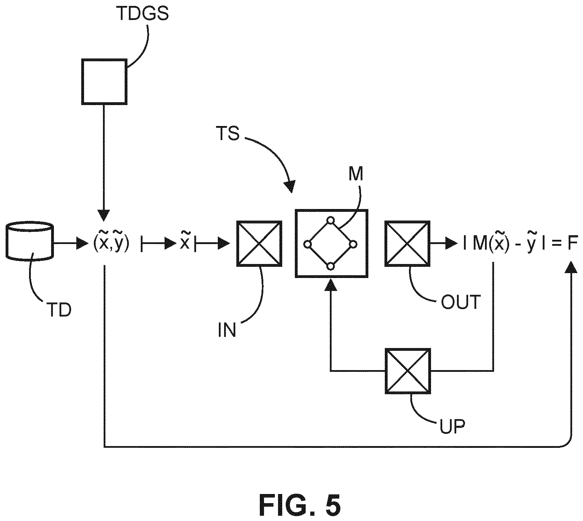

Reference is now made to Figure 5 which shows a training system TS for training the ML model M. The training data is shown as pairs $(\tilde{x}, \tilde{y})^k$ for a supervised setting, with $\tilde{x}$ indicating a training input image, and $\tilde{y}$ its associated target and index "*k*" an index for a training pair, the training pairs making up the training data set.

For example, in the case of the location determiner LD, for a given pair *i*, $\tilde{x}$ includes at least one or more contrasted input images as per any of the embodiments described above at

Figures 3, whilst $\tilde{y}$ its target is an indication in terms of co-ordinates, bounding boxes or other of the clot location in 2D or 3D, depending on the embodiments one wishes to train for. In case of the composition determiner LD, for a given pair *k*, $\tilde{x}$ includes at least one or more non-contrasted input images as per any of the embodiments described above at Figures 3, whilst $\tilde{y}$ its target is an indication of the composition. The targets $\tilde{y}$ in either case may be provided by user-provided annotation of historical training data for example.

In training phase, an architecture of a machine learning model M, such as the shown CNN network in Figure 4, is pre-populated with initial set of weights. The weights $\theta$ of the model NN represent a parameterization $M^\theta$. The weights may include filter parameters of the convolutional operators CV. It is the object of the training system TS to optimize and hence adapt the parameters $\theta$ based on the training data $(\tilde{x}_k, \tilde{y}_k)^k$ pairs. In other words, the learning can be formulized mathematically as an optimization scheme where a cost function *F* is minimized although the dual formulation of maximizing a utility function may be used instead.

Assuming for now the paradigm of a cost function *F*, this measures the aggregated residue(s), that is, the summed error incurred between data estimated by the neural network model NN and the targets as per some ,or all, of the training data pairs *k* in a batch or over all training data:

$$argmin_\theta F = \sum_k || M^\theta(\tilde{y}_k), \tilde{y}_k || \qquad (1)$$

In eq. (1), function M() denotes the result of the model M applied to training input $\tilde{x}$. The result will differ in general from the associated target *y*. This difference, or the respective residuals for each training pair i, are measured by a distance measure $\|\bullet\|$ Thus, the cost function *F* may be pixel/voxel-based, such as the L1 or L2-norm cost function, or any other norm Lp. Specifically, The Euclidean-type cost function in (1) (such as least squares or similar) may be used for the above mentioned regression task when output layer regresses into clot location P or composition *C*. When the model is to act as classifier, the summation in (1) is formulated instead as one of cross-entropy or Kullback-Leibler divergence or similar. Binary or multi-class classification is envisaged herein for composition vector *C*.

The output training data $M(\tilde{x}_k)$ is an estimate for target $\tilde{y}_k$ associated with the applied input training image data $\tilde{x}_k$. As mentioned, in general there is an error between this output $M(\tilde{x}_k)$ and the associated target $\tilde{y}_k$ for each pair *k*. An optimization procedure such as backward/forward propagation or other gradient based method may then be used to adapt the parameters $\theta$ of the model M so as to decrease the residue for the considered pair $(\tilde{x}_k, \tilde{y}_k)$ or, preferably for a sum of residues in batch (a subset) of training pairs from the full training data set.

The optimization procedure may proceed iteratively. After one or more iterations in a first, inner, loop in which the parameters $\theta$ of the model are updated by updater UP for the current batch of pairs $(\tilde{x}_k, \tilde{y}_k)$, the training system TS enters a second, an outer, loop where a next training data pair $x^{k+1}, y^{k+1}$ or a next batch is processed accordingly. The structure of updater UP depends on the optimization procedure used. For example, the inner loop as administered by updater UP may be implemented by one or more forward and backward passes in a forward/backpropagation algorithm or other gradient based setup, based on the gradient of *F*. While adapting the parameters, the aggregated, for example summed, residues of all the training pairs are considered. The aggregated residue can be formed by configuring the objective function *F* as a sum of squared residues such as in eq. (1) of some or all considered residues for each batch. Other algebraic combinations instead of sums of squares are also envisaged. In general, the outer loop passes over batches (sets) of training data items. Each set ("batch") comprising plural training data items and the summation in (1) extends over the whole respective batch, rather than iterating one by one through the training pairs, although this latter option is not excluded herein.

Optionally, one or more batch normalization operators (not shown) may be used. The batch normalization operators may be integrated into the model M, for example coupled to one or more of the convolutional operator CV in a layer. BN operators allow mitigating vanishing gradient effects, the gradual reduction of gradient magnitude in the repeated forward and backward passes experienced during gradient-based learning algorithms in the learning phase of the model M The batch normalization operators BN may be used in training, but may also be used in deployment.

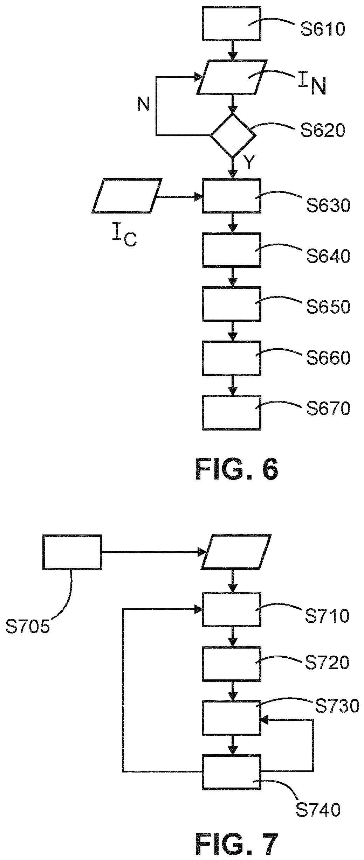

The training system as shown in Figure 7 can be considered for all learning schemes, in particular supervised schemes. Unsupervised learning schemes may also be envisaged herein in alternative embodiments. GPU(s) maybe used to implement the training system TS. The fully trained machine learning module M may be stored in one or more memories MEM' or databases, and can be made available as trained machine learning models for use in system SYS.

In case model M is trained to operate as composition determiner CD, training input $\tilde{x}$ includes input non-contrasted image, either a single image/frame of a spatial and/or time series, and $\tilde{Y}$ indicates a respective composition vector C. Entries of vector C (such two, three or more) indicate content composition, such as ratio in percentages or other quantification of a preferably predefined selection of materials that are assumed to make up the clot.

In machine learning set-ups, a range of NNs models may be used, such as those with dimensional bottleneck structure. Examples include "U-net" networks where feature maps are dimensionally reduced with layer depth, down to a representation at lowest dimensional ("latent space") at a given layer, and feature map dimension may then be increased again in downstream layers with dimension at output layer having the requited size to describe location P and/or composition vector C. Autoencoder networks, variational Autoencoders, Encoder-Decoder networks are also envisaged. Generative networks such as GANs are also envisaged. The NN networks may be feedforward or recurrent.

The location determiner LD and the composition determiner CD may be formulated and trained each as separate models M,M' in a decoupled setup, but processing in a single network in a super-architecture with common output $(P,C)$ and common training data is not excluded herein. Using such a common model, which may be designated herein as M*, such as a single neural network with common learning setup, may prove superior to two separately trained models in case there is some correlation between clot location and composition. For example, some vasculature locales may foster accumulation of certain materials, with materials breaking off from vessel walls, etc. which may favor clots with a certain composition over others.

Even if separate models M,M' are envisaged for clot localization and clot composition determination, each model can still be trained on combined training data comprising both, contrasted $I_C$ and non-contrasted imagery $I_N$. For example, the model M' for clot composition determination CD may be trained to co-process non-contrasted imagery $I_N$ in addition to the contrasted imagery $I_C$. The contrasted imagery $I_C$ thus provides additional context data. Thus, model M, for example in NN architecture, may be configured for multi-channel processing. For example, the model M may be configured to process a tensor including the non-contrasted imagery $I_N$ and the contrasted imagery $I_C$. Convolutional operators CV may operate separately on each channel, or preferably, there is cross-channel convolution to combine information from the image types $I_N,I_C$. A similar combined input may considered for the location determiner LD model M', where it is now the channel with the non-contrasted imagery that provides context information.ML models of other than the neural network type may be used instead, such as clustering type algorithms, including nearest neighbors or others. Other techniques such as statistical regression techniques, decision trees, random forest, support vector machines, etc may be used instead at least in parts for the ML pipeline M or M'.

As briefly mentioned above, the training data $(\tilde{x}, \tilde{y})^k$ may be sourced from existing, historical (previous) brain imagery of the current patient or other patients obtained in previous imaging sessions, and as may be found in medical databases TD. For example, X-ray imagery of the region of interest, such as the brain, may be retrieved from plural patient records by running a database search or by using a scripting tool that searches patient records, header data, etc to find suitable prior imagery $\tilde{X}$, that may serve as a basis for training data. Such scripting tool may also serve to automatically generate and associate correct targets or labels $\tilde{Y}$. For example, natural language reports or structured data may describe the clot composition and location in the historic imagery for a given patient. This information on clot composition and location may be used to label the imagery, such as obtaining suitable pairs $(\tilde{X}, \tilde{Y})^i$. Alternatively, the historical imagery is reviewed by a human (clinical) export who manually annotates the imagery to so obtain the targets.

In addition or instead of such historical imagery, the training data may be artificially generated by a training data generator system TDGS. For example, X-ray imagery of the region of interest, such as the brain, may be found in existing medical image stock, not necessarily related to stroke or clots. The training data generating system TDGS may use such prior imagery as a basis for generating synthesized training imagery. Previous imagery of clots may be cropped from some images to obtain a clot image structure, in projection domain or image domain. The historic imagery is segmented to identify vessel. The cropped clot image structure may be overlaid on the vessel tree in the historic neurovasculature imagery. This placement of clot image structure (a reconstruction or a projection footprint) may be repeated for different branches of the vessel tree, or at different locations in a given branch, thus synthesizing a large number of simulated stroke images, wherein in each simulated stroke image, the clot image structure appears at a respective different (single) position on the vessel tree. Contrast in the vessel tree branch downstream from where the artificial clot image structure is placed can be reduced or removed to simulate the ischemic occlusion. Thus, additional image information can be overlayed on the existing training data with down-stream contrast reduction to so produce artificial locations of the clot. Clot placement can be done at random at different sections of the tree to generate a rich pool of training data with great variability.

The above-described procedure can be done by clinical expert user, based on vessel tree segmented historical patient imagery. Image processing tools, preferably with interactive GUI display may be used. The clot structure may be placed by pointer interaction, such as drag-and-drop GUI functionality. Graphics manipulation software such as shaders, etc. may be used to simulate the occlusion.

Alternatively, the generator pipeline TDGS is done semi- or fully automatically. For example, ML approaches may be used. ML models of the generative type, such GANS "Generative adversarial networks" as described by Ian Goodfellow and others, available at arXiv: 1406.2661 [stat.ML], submitted 10 June 2014, may be used with benefit to practice training data generator pipeline TDGS. From a pool of real historic image samples with clot representation, the GAN system generates in an adversarial learning process, driven by a specially designed cross-entropy based cost function, synthetically generated samples of such clot in vasculature imagery. Two ML models, such as two NN models, called the generator and discriminator, are pitted against each other with conflicting objectives as encoded in the said entropy-based cost function: i) the generator is adjusted in the optimization procedure to encourage production of artificial samples of clot imagery which are misclassified as real by the discriminator, whilst ii) the discriminator is adjusted to encourage production of correct classification. The optimization is driven by the said cost function. Over multiple iterations, this setup converges to a Nash equilibrium, at which point the generator is deemed sufficiently trained and can be used to generate an arbitrarily large pool of training clot imagery. No explicit labeling is required in GAN.

Turning now in more detail to composition determiner CD, machine learning approaches are not necessarily required herein to implement this component, although ML implementation is not excluded herein (see in particular below). A non-ML may be called for in particular when a spectral imaging setup is used, with a number of energy levels configured to correspond to the number $N$ of expected constituent materials as clot components. For example, $N=3$ energy levels may be used to solve for three components commonly found and as briefly mentioned earlier: fibrin, red bool cells, and platelets. However, the number of energy levels may not necessarily equal the number of materials. The number of energy levels may be more or less than $N$. Known spectral based images processing algorithms, such as material decomposition etc, may be used, as attenuation values are known to have a unique dependance not only energy but also of specific material types. Alvarez at et al have reported in "Energy-selective reconstructions in X-ray computerized tomography", published Phys Med Biol, Vol 21(5): 733-44 (1976), as setup where the multi($N$)-energy measurements $\mu_j(Ej)$ are used to solve for $N$ coefficients in a system of $N$ linear equations:

$$\mu_j(Ej) = \sum_j^N a_{mj} \cdot \mu_{mj}(Ej) \qquad (2)$$

with coefficients $a_{mj}$ are representative of clot's material composition, and the $\mu_{mj}(Ej)$ are known attenuations of materials $mj$ at different energies as can be obtained from reference tables. Decomposition (2) is performed by composition determiner CD at location $P$ indicated by location determiner LD. The solved for coefficients $a_{mj}$ represent the composition $C$.

Whether or not spectral imaging is used, the composition determiner CD may still be implemented by a machine learning model of a similar types, such as NNs or others, as described above for the location determiner LD, except that output $y$, $\tilde{y}$ is now a composition vector $C=(c_1,...c_N)$. Entries $c_j$ may indicate the respective proportions of the suspected constituent material components of the clot. Again, $N=3$ may be set on physiological grounds, such as for $C = (F(\text{fibrin})$, $RBC$ (red blood cells$)$, $PL(\text{platelets}))$. The order or entries in $C$ is immaterial, but should be kept once set for consistency and good learning performance. Again, a regression type model M' may be used to regress input $x$, $\tilde{x}$, into the composition vector $C= y$ or $C= \tilde{y}$ for deployment or training, respectively.

In deployment, the input $X$ includes on or more non-contrasted images IN with location P provided by location determiner. It is the image information at this location that is then processed by model M. Alternatively, the whole non-contrasted image $I_N$ is processed by model M with location P provided as location context. The location P and the image $I_N$ to which location P pertains is the co-processed by model M. Accordingly, training input data $\tilde{X}$ may include non-contrasted imagery, with a clot location P provided by an expert or inferred by from a database or scripting tool query. Thus, the input $X$, $\tilde{X}$ in learning phase or deployment phase may be written as $(P, I_N)$, of dimension 2D+1 or 3D+1. P may be embedded into input image $I_N$ itself, such as in form of a bbox or other location annotator.

Alternatively, the composition determiner CD may be configured as an ML-classifier to classify clot into an F, RBC or PL, or mixed clot, rather than regressing into a composition vector. A simpler configuration into a binary classifier may be considered if applicable. Such a classifier may be configured to classify composition into merely two categories, for example "ovine" or "RBC, etc.

The clot composition determiner CD in ML or non-ML implementation may operate on a single non-contrasted input image IN (non-spectral/conventional or spectral) to determine the clot for example using spectral processing as described at (2) or by using ML. Alternatively, the composition determiner CD operates on a time $t$ sequence of non-contrasted images $I_N^t$ as it appears that different compositions of clots exhibit different uptake behavior over time. More specifically, it appears that some of the contrast agent is least partially accumulated within the clot and this may depend on the clot's material composition. Thus, different HU uptake over time may correlate with clot composition. In other words, at the clot position (a pixel/voxel or pixel/voxel neighborhood) provided by the location determiner LD, the respective uptake curve over a number of non-contrasted frames are analyzed by composition determiner CD to compute the composition of the clot as recorded by a sequence of non-contrasted images. plural such TUCs may be used per location, such as the timed images $I_C^1$-$I_C^3$ described above, or other Look-up tables may be used to match the curve to pre-defined curve types, for example, to compute a composition. For example, different such uptake curves may be computed for different stock compositions and the observed uptake value curve may be fitted to any of those. The type that attracts the best fit is then used as an indicator for the composition type.

Alternatively, the composition determiner CD is arranged as an NN model to process the sequence of uptake values over time to compute the composition C. NN models with a recurrent architecture may be used when proceeding time data such as the sequence of uptake values. The training data input $\tilde{x}$ or input $x$ in deployment may thus comprise the said sequence $I_N^t$ with location $P$ indicated to so define the TUC at location P.

Alternatively, a cluster type algorithm may be used to implement composition determiner CD, such as k-nearest neighbors or other statistical or ML clustering algorithms, as one example for implicit modelling (as opposed to NN modelling or other such type of explicit modelling). Uptake curves at clots in historical training data imagery is clustered for example by a human expert or automatically by the clustering algorithm, to obtain clusters of uptake curves, each cluster corresponding to a respective clot composition. The clustered training data thus forms the implicit model. A new uptake curve encountered in deployment is then assigned using the clustering algorithm to the best cluster, thus determining clot composition.

Reference is now made to the flow charts in Figure 6 which shows steps of a method of automated image-based clot characterization, preferably in a neurovasculature or other parts of a human or mammal vasculature such as in the extremities, arms or legs. Characterization of other type of masses (foreign or innate) in other cavity systems, such as in a urinary tract is also envisaged herein. "*Clot*" as used herein includes any or more of embolus, thrombus, or other.

At step S610, a non-contrast image $I_N$ obtained by an imaging apparatus IA is received. The non-contrast image $I_N$ may be native or may be generated as a virtual non-contrast image based on spectral imaging techniques.

At an optional step S620 it is determined, based on the non-contrasted image $I_N$, whether the suspected stroke case is ischemic. If it is not (eg, if it is a hemorrhagic case), method flow enters into a waiting loop or terminates. An alert may be initiated. If stroke case is detected as ischemic, method flow proceeds to where a contrasted image $I_C$ is obtained using the same or a different imaging apparatus.

The contrasted image $I_C$ is received at step S630.

At step S640 a clot location is determined based on the contrasted one or more images $I_C$. The non-contrasted imagery $I_N$ is preferably not used in this step.

At step S650 the clot composition is determined based on the (one or more) non-contrasted image $I_N$ at the location determined in step S640. The contrasted imagery $I_C$ is preferably not processed in this step.

An optional (spatial) registration between the contrasted image(s) $I_C$ and the non-contrasted image(s) $I_N$ may be required for step S650, in case the there is no native registry. The registration may be a 3D/3D registration of contrasted and non-contrasted imagery, or a 3D/2D registration, depending on the domain-combinations described above at Figures 3.

In some embodiments, and as an alternative to the above, both contrasted and non-contrasted imagery may still be used for clot localization at step S640 and/or for clot composition determination at step S650. The respective other image type (non-contrasted and contrasted) may serve as additional contextual information, which may be useful in particular in ML implementations.

At step S660 the clot characteristic, including the location and composition, is made available.

At step S670 the clot location and preferably the composition of the clot is visualized. The visualization may be preferably in conjunction with one or more of the input imagery, such as the contrasted and/or the non-contrasted image.

Step S650 for determining the clot composition may be based on analyzing uptake value curves over time at the identified location or in its neighborhood.

The method may operate solely in image domain or may solely operate in projection domain, or a combination where imagery from both domains are used. The steps of determining location and/or composition may be done by machine learning, but this is not a necessity herein. A single common model may be trained and used on combined data to yield clot composition and location. Alternatively, separate models are used for location and clot composition.

The clot location may be determined in projection domain and may then be back projected into image domain. Processing 2D data (in projection domain) may be more responsive, consuming less of CPU and memory overhead.

3D processing may be more accurate.

Whilst the above has been described mainly by the reference to clot, thrombus, embolus location and composition, it should be noted that the system and methods described above are of equal application to characterization of the materials innate or foreign in other medical applications as indicated above. Even non-medical applications such as in analysis of inaccessible drainage or plumbing systems are not excluded herein.

Turning now to Figure 7, this shows a flow chart of a computer-implemented method of training the machine learning model M for clot localization and/or clot composition.

At optional step S705 training data is generated (synthesized) by artificially placing clot image structure by overlay at image locations in historical patient imagery. This can be done manually, semi-automatically or fully automatically. Generator step S705 may be based on vasculature segmentation in contrasted historic imagery in a cohort of patients or in imagery of a single patient. The method may include placing a generic clot image structure (isolated from historical clot imagery) at a location in the vessel tree. Location may be random or deterministic. Different locations are sampled, with single placements one by one at different single locations, so there is always a single placement at the current location and no more at the previous one or more. To better simulate blockage or reduced blood flow, contrast is reduced downstream the placement. Arterial and veinous part of the vasculature require consideration of correct flow direction.

In addition, or instead, machine learning models(s) of the generative type, such as GANs or similar may be used to generate such training data training artificially/synthetically. In either embodiment, because placement is controlled, labelling is implicit.

At step S710 the training data is received. This may include historical patient data and/or the synthetically generated data of step S705.

Broadly, based on the training data, parameters of the model are adapted. This adaptation may be done in an iterative optimization procedure. The procedure is driven by a cost function. Once a stopping condition is fulfilled, the model is considered trained.

In more detail, and with particular reference to a supervised training setup, at step S720, the training inputs $\tilde{x}_k$ in the current batch are applied to a machine learning model M having current parameters $\theta$ to produce a training outputs $M(\tilde{x}_k)$.

A deviation, or residue, of the training output $M(\tilde{x}_k)$ from the respective associated target $\tilde{y}_k$ is quantified at S730 by a cost function $F$. One or more parameters of the model are adapted at step S740 in one or more iterations in an inner loop to improve the cost function. For instance, the model parameters are adapted to decrease residues as measured by the cost function. The parameters may include in particular weights of the convolutional operators CV, in case a convolutional NN model M is used.

The training method then returns in an outer loop to step S710 where the next batch of training data is fed in. In step S720, the parameters of the model are adapted so that the aggregated residues, considered over the current and preferably over some or all previous batches are decreased, in particular minimized. The cost function quantifies the aggregated residues. Forward- backward propagation or similar gradient-based techniques may be used in the inner loop. A dual formulation in terms of a maximization of a utility function is also envisaged.

Examples for gradient-based optimizations may include gradient descent, stochastic gradient. conjugate gradients, Maximum likelihood methods, EM-maximization, Gauss-Newton, and others. Approaches other than gradient-based ones are also envisaged, such as Nelder-Mead, Bayesian optimization, simulated annealing, genetic algorithms, Monte-Carlo methods, and others still.

Components of the system SYS may be implemented as one or more software modules, run on one or more general-purpose processing units PU such as a workstation associated with the imager IA, or on a server computer associated with a group of imagers.

Alternatively, some or all components of the system SYS may be arranged in hardware such as a suitably programmed microcontroller or microprocessor, such an FPGA (field-programmable-gate-array) or as a hardwired IC chip, an application specific integrated circuitry (ASIC). In a further embodiment still, the system SYS may be implemented in both, partly in software and partly in hardware.

The system SYS may be integrated into the imager IA or into a compute (eg, workstation) associated with the imager.

The different components of the system SYS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

## Claims

1. System for determining position and composition of a clot in a patient, comprising:

   input interface (IF) for receiving input imagery of a region of interest comprising contrasted input imagery and further input imagery contrasted lower than the contrasted input imagery;
   a location determiner (LD) configured for processing the contrasted imagery to determine a location of the clot;
   a composition determiner (CD) configured to determine a clot composition based on the further input imagery at the determined location;
   an output interface (OF) for providing an indication of said clot location and clot composition.

2. System of claim 1, wherein a) the location determiner (LD) is implemented by one of i) a trained machine learning model (M), and ii) a non-machine learning segmentation algorithm, and/or wherein b) the composition determiner (CD) is implemented i) as a trained machine learning model (M') or ii) based in a spectral material decomposition algorithm.

3. System of claim 1 or 2, wherein the location determiner (LD) is configured to perform a back-projection based on an output received from the trained machine learning model or from the segmentor.

4. System of any one of the previous claims, wherein the contrasted imagery and the lower contrasted imagery are reconstructed imagery.

5. System of any one of the previous claims, wherein the further input imagery includes a time series of frames, the composition determiner (CD) configured to determine the clot composition based on an over-time contrast uptake as per the time series.

6. System of any one of the previous claims, wherein the input imagery is based on data acquired by a spectral imaging apparatus.

7. A training system (TS) configured to train, based on training data, the machine learning model of claim 2.

8. A training data generator (TDG) configured to generate training data by modifying existing brain imagery to simulate locations of a virtual clot, the training data suitable for training a machine learning model to predict clot location.

9. An imaging arrangement (IAR) comprising a system of any one of the previous claims and an imaging apparatus (IA) configured to provide the contrasted and/or low-contrasted input imagery.

10. An imaging arrangement of claim 9, wherein the imaging apparatus (IA) is configured for one or more of: i) X-ray based tomographic imaging, ii) energy integrating imaging or spectral imaging, iii) phase contrast or dark-field imaging.

11. A computer-implemented method for determining position and composition of a clot in a patient, comprising:

   receiving (S610,S630) input imagery of a region of interest comprising contrasted input imagery and further input imagery contrasted lower than the contrasted input imagery;
   determining (S640) a location of the clot based on the contrasted imagery;
   determining (S650) a clot composition based on the further input imagery at the determined location; and
   providing (S660) an indication of said clot location and clot composition.

12. A computer implemented method for training, based on training data, the machine learning model of claim 2.

13. A computer implemented method of generating training data by modifying existing brain imagery to simulate locations of a virtual clot, the training data suitable for training a machine learning to predict clot location.

14. A computer program element, which, when being executed by at least one processing unit, is adapted to cause the processing unit to perform the method as per any one of claims 11-13.

15. At least one computer readable medium having stored thereon the program element of claim 14, or having stored thereon the trained machine learning model as per claim 2.

**FIG. 1**

**FIG. 2**

FIG. 3A

FIG. 3B

FIG. 4

TDGS

TS

M

TD

$(\tilde{x}, \tilde{y}) \longmapsto \tilde{x} \longmapsto$

IN

$| M(\tilde{x}) - \tilde{y} | = F$

OUT

UP

# FIG. 5

S610

I~N~

N

S620

Y

I~C~

S630

S640

S650

S660

S670

**FIG. 6**

S705

S710

S720

S730

S740

**FIG. 7**

Europäisches
Patentamt

European
Patent Office

Office européen
des brevets

# EUROPEAN SEARCH REPORT

Application Number

EP 21 21 5424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 798 971 A1 (SIEMENS HEALTHCARE GMBH [DE]) 31 March 2021 (2021-03-31) | 1-4,6-15 | INV. G06T7/00 |
| Y | * paragraph [0006] – paragraph [0087] * <br> * figure 3 * | 5 | G06T7/70 |
| Y | BORGGREFE JAN ET AL: "Differentiation of Clot Composition Using Conventional and Dual-Energy Computed Tomography", CLINICAL NEURORADIOLOGY, SPRINGER BERLIN HEIDELBERG, BERLIN/HEIDELBERG, vol. 28, no. 4, 23 May 2017 (2017-05-23), pages 515-522, XP036635286, ISSN: 1869-1439, DOI: 10.1007/S00062-017-0599-3 [retrieved on 2017-05-23] * page 515 – page 516 * * page 519 – page 520 * | 5 | |
| A | US 2020/297299 A1 (HOFMANN BERND [DE] ET AL) 24 September 2020 (2020-09-24) * paragraph [0006] – paragraph [0032] * * paragraph [0072] – paragraph [0124] * | 1-15 | |

TECHNICAL FIELDS
SEARCHED        (IPC)

G06T

The present search report has been drawn up for all claims

| Place of search | Date of completion of the search | Examiner |
|---|---|---|
| Munich | 25 May 2022 | Maier, Werner |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 21 5424

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2022

| Patent document cited in search report | | Publication date | Patent family member(s) | | Publication date |
|---|---|---|---|---|---|
| EP 3798971 | A1 | 31-03-2021 | CN | 114514556 A | 17-05-2022 |
| | | | EP | 3798971 A1 | 31-03-2021 |
| | | | EP | 4004867 A1 | 01-06-2022 |
| | | | WO | 2021063709 A1 | 08-04-2021 |
| US 2020297299 | A1 | 24-09-2020 | CN | 111738977 A | 02-10-2020 |
| | | | DE | 102019203714 A1 | 24-09-2020 |
| | | | US | 2020297299 A1 | 24-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997, 2, , 6
- Automatic image segmentation by wave propagation. **F M PORIKLI.** Image Processing: Algorithms and Systems III. Proc. SPIE, 28 May 2004
- **GANS ; IAN GOODFELLOW.** Generative adversarial networks. *arXiv: 1406.2661,* 10 June 2014
- **ALVAREZ et al.** Energy-selective reconstructions in X-ray computerized tomography. *Phys Med Biol,* 1976, vol. 21 (5), 733-44